# EUROPEAN PATENT APPLICATION

(11) **EP 1 235 009 A2**
(43) Date of publication of application: **28.08.2002**
(21) Application number: 02004414.5
(22) Date of filing: 26.02.2002
(51) Int. Cl.: F16J 15/32, F16J 15/44

(54) **Shaft seal for a rotating machine**

(30) Priority: 27.02.2001 JP 2001052055
(71) Applicant: Mitsubishi Heavy Industries, Ltd., Tokyo (JP)
(72) Inventor: Yoshida, Zenichi, c/o Takas.R & D Ctr., Takasago, Hyogo-ken, 676-8686 (JP); Shinohara, Tanehiro, c/o Takas. R.& D.Ctr., Takasago, Hyogo-ken, 676-8686 (JP); Miyawaki, Toshihiro, c/o Takas. R.& D. Ctr., Takasago, Hyogo-ken, 676-8686 (JP); Konishi, Tetsu, c/o Takas.Mach.Works, Takasago, Hyogo-ken, 676-8686 (JP); Nakano, Takashi, c/o Takas.Mach.Works, Takasago, Hyogo-ken, 676-8686 (JP); Enomoto, Kenji, Takasago, Hyogo-ken, 676-0008 (JP); Toda, Yutaka, Takasago, Hyogo-ken, 676-0008 (JP)
(74) Representative: Henkel, Feiler, Hänzel

(57) **Abstract**

A shaft seal for a rotating machine having a rotating shaft includes a support ring, surrounding the shaft, supported by a casing. The support ring includes a plurality of movable ring segments and fixed ring segments adjoining each other in a circumferential direction of the support ring. The movable ring segments are biased away from the shaft by biasing members provided at circumferential ends of the fixed ring segments. Sealing fins and sealing sheets are disposed along the inner periphery of the support ring.

## Description

### Reference to Related Applications

This application is based on Japanese Patent Application No. 2001-052055, filed in Japan on February 27, 2001, the contents of which are hereby incorporated by reference.

### Background of the Invention

### 1. Field of the Invention

This invention relates to a shaft seal for a rotating machine having a rotating shaft. The present invention is not limited to use with any particular type of rotating machine, but it is particularly advantageous for use with a rotating machine such as a steam turbine in which there is a large variation in the clearance around a rotating shaft during the operation of the rotating machine.

### 2. Description of the Related Art

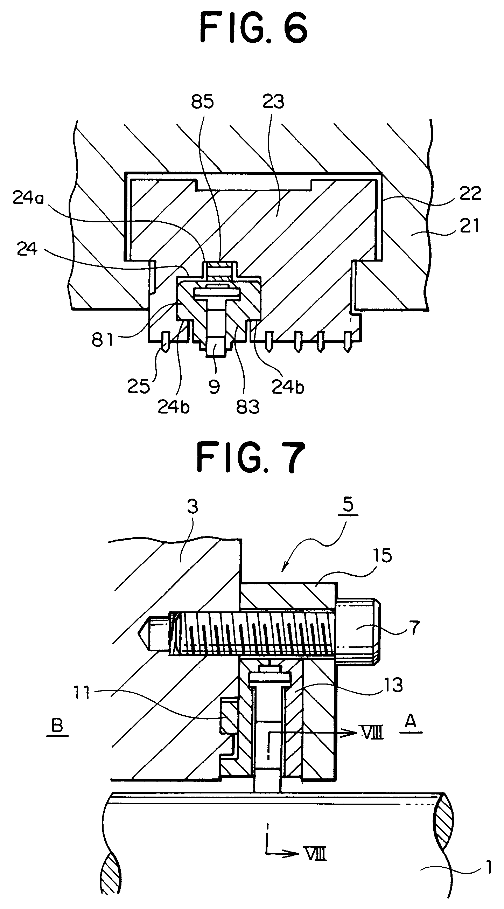

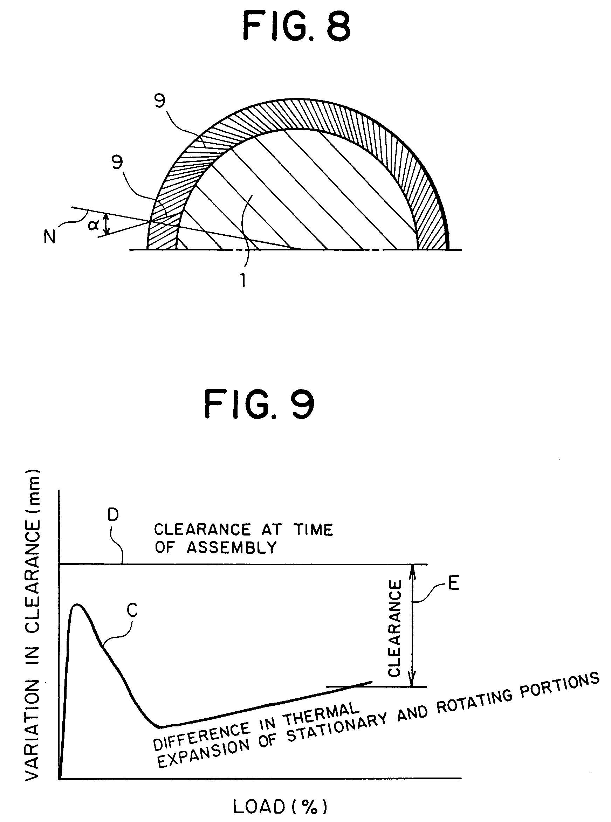

Figures 7 and 8 illustrate one example of the structure of a shaft seal of the type to which the present invention relates. Figure 7 is a partially cross-sectional side elevation of a portion of the shaft seal, and Figure 8 is a transverse cross-sectional view taken along line VIII-VIII of Figure 7. As shown in these figures, a rotating shaft 1 of a steam turbine or other rotating machine passes through a hole in a casing 3 which separates a high pressure space A and a low pressure space B of the rotating machine from each other. A shaft seal 5 is mounted on the casing 3 by bolts 7. The seal 5 includes a plurality of metal sealing sheets 9 which are disposed around the periphery of the shaft 1 with a narrow gap in the circumferential direction between adjoining sealing sheets 9. The sealing sheets 9 are held between two holders 11 and 13 which oppose each other on opposite sides of the metal sealing sheets 9 in the lengthwise direction of the shaft 1. A retaining plate 15 surrounds the sealing sheets 9 on their radially outward side. As shown in Figure 8, each sealing sheet 9 is sloped with respect to a line N which is normal to the outer surface of the shaft 1 (in this case, line N is a straight line passing through the center of the shaft 1) by an angle α. The sealing sheets 9 are elastically deformed so that their radially inner ends are pressed against the outer surface of the shaft 1 by the elasticity of the sealing sheets 9. The radially outer ends of the sealing sheets 9 are connected to each other by welding or other suitable method.

Since the radially inner ends of the sealing sheets 9 are pressed against the outer peripheral surface of the shaft 1 by elasticity, they can remain in sealing contact with the shaft 1 even when the position of the shaft 1 undergoes minute variations during operation of the rotating machine. Therefore, leakage of fluid from the high pressure space A to the low pressure space B is primarily through the circumferential gaps between adjoining sealing sheets 9. The amount of leakage through the circumferential gaps can be decreased by increasing the number of sealing sheets 9.

In a steam turbine or similar rotating machine, the clearance between a rotating portion (such as the shaft 1) and a stationary portion (such as the casing 3) may vary significantly during the operation of the turbine. Figure 9 is a graph illustrating the variation in the clearance between a rotating portion and a stationary portion in a typical steam turbine as a function of the load on the turbine. As shown in this figure, the variation in clearance has a general tendency to increase as the load increases due to an increase in the difference between the thermal expansion of the stationary portion and that of the rotating portion. The actual clearance (E in Figure 9) between the stationary and rotating portions at a given load is the difference between the clearance between the two portions at the time of assembly (D) and the difference in the amount of thermal expansion of the two portions at the given load (C). The actual clearance (E) may be significantly smaller than the clearance at the time of assembly (D). As the actual clearance (E) decreases, the deformation of the sealing sheets 9 increases. Although the deformation of the sealing sheets 9 to produce sealing contact with the shaft 1 is preferably in the elastic range, there are cases in which the decrease in the actual clearance causes the deformation of the sealing sheets 9 to exceed the elastic range, and permanent deformation of the sealing sheets 9 ends up taking place. As a result of the permanent deformation, a radial gap may be formed between the radially inner ends of the sealing sheets 9 and the outer surface of the shaft 1, resulting in a decrease in sealing performance and an increase in leakage between the high and lower pressure spaces A and B.

### Summary of the Invention

Accordingly, the present invention provides a shaft seal for a rotating machine which does not produce an increase in leakage as the load on the rotating machine increases, even with a rotating machine such as a steam turbine in which there is a large difference between the thermal expansion of rotating and stationary portions.

According to one form of the present invention, a shaft seal for a rotating machine having a rotating shaft includes a casing which surrounds the shaft and a support ring supported by the casing surrounding the shaft. The support ring includes a plurality of movable ring segments and fixed ring segments adjoining each other in a circumferential direction of the support ring. A biasing member is provided at a circumferential end of each fixed ring segment to bias the adjoining movable ring segment away from the shaft. The seal further includes a plurality of sealing fins installed on an inner surface of the support ring, and a plurality of sealing sheets supported by the support ring surrounding the shaft.

The sealing sheets may be held between holders disposed in a cavity in the support ring. The holders may be pressed against the interior of the cavity by a screw or a spring to maintain the position of the holders and the sealing sheets during the operation of the rotating machine.

Due to the multipiece structure of the support ring, the position of the sealing sheets in the radial direction of the rotating shaft can be varied in accordance with the operating conditions of the rotating machine. When the load on the rotating machine is in a range in which there is a large difference in thermal expansion between the rotating shaft and the casing of the rotating machine and a small clearance between the rotating shaft and the casing, the sealing sheets can be positioned farther from the rotational center of the rotating shaft to prevent permanent deformation of the sealing sheets. On the other hand, when the load on the rotating machine is in a range in which there is a lesser difference in thermal expansion between the rotating shaft and the casing and a larger clearance between the rotating shaft and the casing, the sealing sheets can be moved closer to the rotational center of the rotating shaft to compensate for the large clearance. Thus, the sealing sheets can be maintained in sealing contact with the rotating shaft as the load varies without undergoing permanent deformation, and an increase in leakage due to permanent deformation of the sealing sheets can be prevented.

### Brief Description of the Drawings

Figure 1 is a longitudinal cross-sectional view of a portion of an embodiment of a shaft seal for a rotating machine according to the present invention.
Figure 2 is a transverse cross-sectional view along line II-II of Figure 1.
Figure 3 is a perspective view of a portion of the support ring taken along line III-III of Figure 2.
Figure 4 is a longitudinal cross-sectional view of a portion of another embodiment of a shaft seal according to the present invention.
Figure 5 is a longitudinal cross-sectional view of a portion of still another embodiment of a shaft seal according to the present invention.
Figure 6 is a longitudinal cross-sectional view of a portion of yet another embodiment of a shaft seal according to the present invention.
Figure 7 is a longitudinal cross-sectional view of a portion of a shaft seal of the type to which the present invention relates.
Figure 8 is a transverse cross-sectional view taken along line VIII-VIII of Figure 7.
Figure 9 is a graph showing a typical relationship of the variation in clearance between a rotating portion and a stationary portion of a steam turbine and the load on the turbine.

### Description of Preferred Embodiments

A number of preferred embodiments of the present invention will be described while referring to the accompanying drawings, in which the same or corresponding parts are indicated by the same reference numbers.

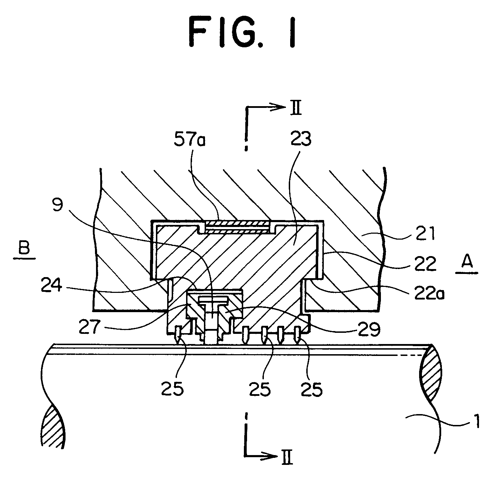

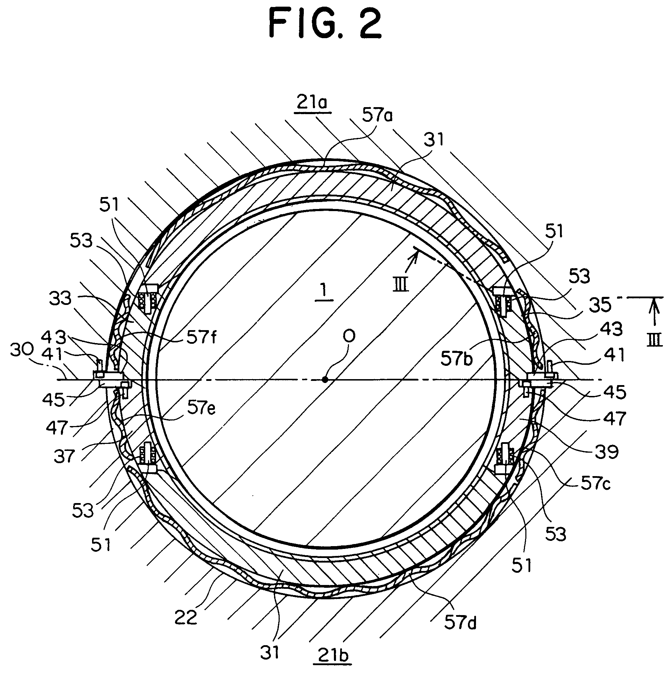

Figure 1 is a longitudinal cross-sectional view of a portion of an embodiment of a shaft seal according to the present invention, and Figure 2 is a cross-sectional view taken along line II-II of Figure 1. The shaft seal is shown being used to form a seal around a rotating shaft 1 of a steam turbine as one example of a rotating machine to which the present invention can be applied. Figure 1 shows portions of the seal only on the upper side of the shaft 1, while Figure 2 shows both the upper and lower halves of the seal. As shown in these figures, a casing 21 of the turbine separates a high pressure space A and a low pressure space B from each other, and the shaft 1 extends through a hole in the casing 21 between the two spaces A and B. The casing 21 includes an upper portion 21a and a lower portion 21b. A horizontal plane 30 passing through the rotational center O of the shaft 1 defines a joining surface between the upper and lower portions 21a and 21b. A support ring 23 is installed in a circumferentially extending cavity 22 formed in the casing 21 and surrounds the shaft 1. A plurality of sealing fins 25 which are spaced from each other in the longitudinal direction of the shaft 1 are mounted on the inner peripheral surface of the support ring 23 surrounding the shaft 1 to form a labyrinth seal. The illustrated embodiment includes five sealing fins 25, but a different number may be employed. A plurality of sealing sheets 9 are supported between a pair of opposing holders 27 and 29 disposed in a circumferentially extending cavity 24 in the support ring 23 between two of the sealing fins 25. The sealing sheets 9 may have the same structure as the sealing sheets 9 described above with respect to Figures 7 and 8.

As shown in Figure 2, the support ring 23 has a multipiece structure comprising a plurality of arcuate segments combined into a ring-shaped shaft. The support ring 23 has a structure which is symmetric with respect to the horizontal plane 30 defining the joining surface between the upper and lower portions 21a and 21b of the casing 21. It includes two arcuate movable ring segments 31 disposed on opposite sides of the horizontal plane 30, and four arcuate fixed ring segments 33, 35, 37, and 39 disposed between the movable ring segments 31.

The sealing fins 25 are also divided in the circumferential direction into a plurality of segments, with each segment of a given sealing fin 25 mounted on a different one of the segments of the support ring 23. Each of the fixed ring segments has one circumferential end adjoining one of the movable ring segments 31 and another circumferential end adjoining another one of the fixed ring segments. The circumferential end surfaces of adjoining fixed ring segments coincide with the horizontal plane 30.

Movement of the fixed ring segments 33, 35, 37, and 39 in the circumferential direction of the support ring 23 is controlled by two retainers 43 and two other retainers 45. Each of retainers 43 has one end secured in a space in the joining surface of the upper portion 21a of the casing 21 by a screw 41 and another end which fits into a space in fixed ring segment 33 or 35. Each of retainers 45 contacts one of retainers 43 and has one end secured to fixed ring segment 37 or 39 by a screw 47 and another end which fits into a space in the joining surface of the lower portion 21b of the casing 21.

The fixed ring segments 33, 35, 37, and 39 are urged in the radially inwards direction towards a circumferentially extending ledge 22a formed on the interior of the cavity 22 in the casing 21 by biasing members comprising leaf springs 57a - 57f provided between the outer periphery of the support ring 23 and the opposing outer wall of the cavity 22. In the present embodiment, one leaf spring is provided for each segment of the support ring 23, but a different number may be employed, and biasing members other than leaf springs may also be employed for this purpose.

A hole is formed in one of the circumferential ends of each fixed ring segment 33, 35, 37, and 39 opposing a circumferential end of the adjoining movable ring segment 31, and the shank of a support rod 51 is disposed in each hole. Each support rod 51 has an enlarged head secured to its shank. The head is urged against the adjoining movable ring segment 31 by a biasing member such as a coil spring 53 which is disposed in the hole around the shank and presses against the head of the support rod 51. The force applied to the support rods 51 by the coil springs 53 acts in a direction to urge the movable ring segments 31 away from the horizontal plane 30 passing through the center O of the shaft 1.

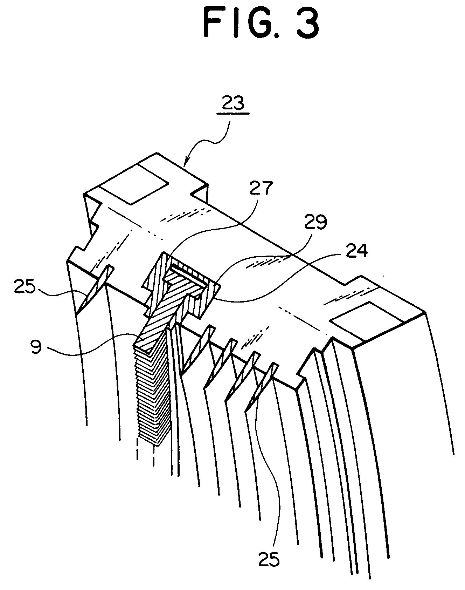

Figure 3 is a perspective view of a portion of the support ring taken along line III-III of Figure 2. This figure shows the structural relationship of the holders 27 and 29, the sealing sheets 9 and the support ring 23 comprised of the movable ring segments 31 and the fixed ring segments 33, 35, 37 and 39. Further, the circumferential end surfaces of the movable ring segments 31 are not shown in section.

The coil springs 53 are selected such that when there is no pressure difference between the high pressure space A and the low pressure space B, the movable ring segments 31 are pushed away from the horizontal plane 30 against the force of leaf springs 57a and 57d by an amount such that the sealing sheets 9 mounted on the movable ring segments 31 do not contact the shaft 1. In this state, the movable ring segments 31 are lifted off the ledges 22a in the cavity 22 housing the support ring 23 and a radial gap is formed between the ledges 22a and the movable ring segments 31. As the pressure difference between spaces A and B increases, on the inner peripheral portion of the support ring 23, fluid flows from the high pressure space A to the low pressure space B along the periphery of the sealing fins 25 and the sealing sheets 9, and the pressure in this portion decreases. The fluid force due to the pressure distribution at this time acts on the inner periphery of the movable ring segments 31. Due to the difference in the pressures acting on the support ring 23 in the axial direction of the shaft 1, the support ring 23 is pressed against the interior of the cavity 22 of the casing 21 in the direction from the high pressure space A towards the low pressure space B (to the left in Figure 1), and an axial gap is formed between the right side of the support ring 23 in Figure 1 and the right side of the cavity 22 in the casing 21. Since the movable ring segments 31 are raised above the ledges 22a of the cavity 22, fluid from the high pressure space A flows into the radial gap between the cavity 22 and the outer periphery of the support ring 23 along the axial gap between the radially outer periphery of the cavity 22 and the support ring 23 and the radial gap between the movable ring segments 31 and the ledges 22a of the cavity 22. As a result, the pressure of the high pressure space A acts on the outer periphery of the movable ring segments 31 in the radially inward direction. When a certain pressure difference between spaces A and B is exceeded, the fluid force acting on the movable ring segments 31 in the radially inwards direction becomes larger than the sum of the fluid force acting on the movable ring segments 31 in the radially outwards direction and the force of the coil springs 53, so the movable ring segments 31 move in the radially inward direction until the movable ring segments 31 contact the ledges 22a in the cavity 22.

In a steam turbine having operating characteristics like those shown in Figure 9, the pressure difference between spaces A and B has a tendency to increase as the load increases. As the load on the turbine increases from zero, the clearance between the shaft 1 and the inner periphery of the casing 21 initially rapidly decreases to a small value, after which the clearance increases and then gradually decreases. In the present embodiment, at zero load, there is a radial clearance between the inner ends of the sealing sheets 9 and the outer periphery of the shaft 1. As the load increases, the radial clearance rapidly decreases to bring the sealing sheets 9 into sealing contact with the shaft 1, but because of the initial radial clearance, the decrease in clearance as the load increases does not produce permanent deformation of the sealing sheets 9. As the load further increases, the radial clearance between the shaft 1 and the casing 21 begins to increase, but due to the increased pressure difference between spaces A and B accompanying the increase in load, the movable ring segments 31 are moved radially inwards as described above to maintain the inner ends of the sealing sheets 9 in sealing contact with the outer periphery of the shaft 1, but without the sealing sheets 9 undergoing permanent deformation. Therefore, the present embodiment can maintain a good seal around the shaft 1 without damage to the sealing sheets 9 over a wide range of loads.

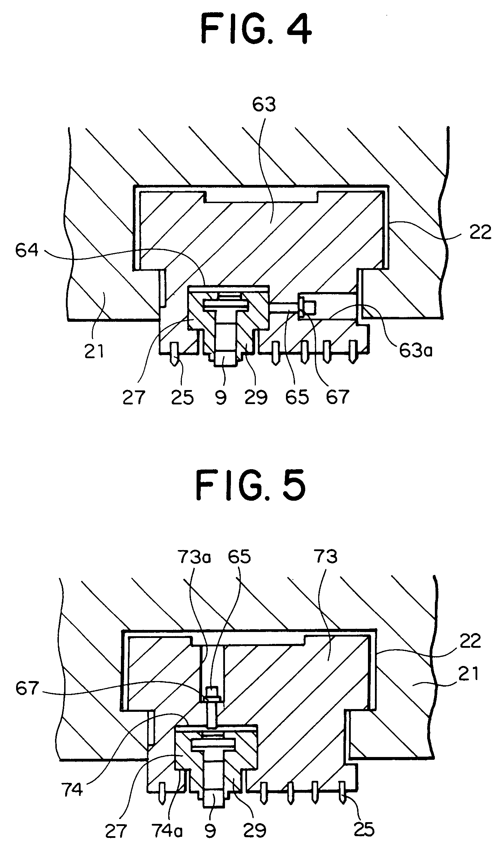

Figure 4 is a longitudinal cross-sectional view of a portion of another embodiment of a shaft seal according to the present invention. The overall structure of this embodiment is similar to that of the embodiment of Figure 1, but the support ring 23 of Figure 1 has been replaced by support ring 63. Like support ring 23, this support ring 63 has a circumferentially extending cavity 64 for receiving sealing sheets 9 and holders 27 and 29 for holding the sealing sheets 9, and it is divided in the circumferential direction into a plurality of movable ring segments and fixed ring segments corresponding to the movable and fixed ring segments of the embodiment of Figure 1. Each ring segment of the support ring 63 includes one or more counterbored hole 63a communicating between a side wall of the cavity 64 and an exterior side wall of the support ring 63. A set screw 65, which may be equipped with a washer 67, is disposed in each hole 63a with the inner end of the set screw 65 pressed against holder 29 to prevent the holders 27 and 29 and the sealing sheets 9 from shifting within the cavity 64 in the circumferential direction of the support ring 64. In this manner, the position of the sealing sheets 9 in the circumferential direction is prevented from deviating when the sealing sheets 9 contact the rotating shaft 1 during operation of the turbine. The operation of this embodiment is otherwise the same as that of the previous embodiment.

Figure 5 is a longitudinal cross-sectional view of a portion of still another embodiment of a shaft seal according to the present invention. The overall structure of this embodiment is similar to that of the embodiment of Figure 1, but the support ring 23 of Figure 1 has been replaced by support ring 73. Like support ring 23, support ring 73 includes a circumferentially extending cavity 74 for receiving sealing sheets 9 and holders 27 and 29 for holding the sealing sheets 9. In addition, support ring 73 is divided in the circumferential direction into a plurality of movable ring segments and fixed ring segments corresponding to the movable and fixed ring segments of support ring 23. Each ring segment of support ring 73 includes one or more counterbored hole 73a communicating between the radially outer wall of the cavity 74 and the radially outer periphery of the support ring 73. A set screw 65, which may be equipped with a washer 67, is disposed in each hole 73a with the inner end of the set screw 65 pressed against holders 27 and 29 to press the holders 27 and 29 radially inwardly against circumferentially extending ledges 74a of the cavity 74. In this manner, the holders 27 and 29 are prevented from shifting in the cavity 74 in the radial direction. As a result, the sealing sheets 9 and the movable ring segments of the support ring 73 can move as a single body in the radial direction of the shaft 1 during operation of the turbine, so the amount by which the sealing sheets 9 project from the inner periphery of the support ring 73 towards the shaft 1 can be maintained constant. The operation of this embodiment is otherwise the same as that of the embodiment of Figure 1.

Figure 6 is a longitudinal cross-sectional view of a portion of yet another embodiment of a shaft seal according to the present invention. The overall structure of this embodiment is similar to that of the embodiment of Figure 1, but in this embodiment, a recess 24a is formed in the radially outer wall of the cavity 24 of the support ring 23, and a compression spring 85 is disposed in the recess 24a to exert a radially inwards force on the holders 81 and 83 for the sealing sheets 9. A plurality of the compression springs 85 are disposed at intervals in the circumferential direction of the support ring 23. The compression springs 85 press the holders 81 and 83 radially inwardly against circumferentially extending ledges 24b on the side walls of the cavity 24 to prevent the holders 81 and 83 from shifting in the cavity 24 in the radial direction. Therefore, the sealing sheets 9 and the movable ring segments of the support ring 23 can move as a single body in the radial direction of the shaft 1 during operation of the turbine, and the amount by which the sealing sheets 9 project from the inner periphery of the support ring 23 towards the shaft 1 can be maintained constant. The operation of this embodiment is otherwise the same as that of the embodiment of Figure 1.

## Claims

1. A shaft seal for a rotating machine having a rotating shaft comprising:
a casing which surrounds the shaft;
a support ring supported by the casing to surround the shaft, including a plurality of movable ring segments and fixed ring segments adjoining each other in a circumferential direction of the support ring and a biasing member provided at a circumferential end of each fixed ring segment to bias the adjoining movable ring segment away from the shaft;
a plurality of sealing fins spaced from each other in an axial direction of the shaft and installed on an inner surface of the support ring to form a labyrinth seal around the shaft; and
a plurality of sealing sheets disposed between two of the sealing fins with a gap between adjoining sheets in a circumferential direction of the shaft, each sealing sheet having an inner end for forming a seal against the outer surface of the shaft.

2. A shaft seal for a rotating machine as claimed in claim 1 including a pair of holders mounted on the support ring on opposite sides of the sealing sheets, and a screw which exerts a force on the holders to resist movement of the holders with respect to the support ring.

3. A shaft seal for a rotating machine as claimed in claim 1 including a pair of holders mounted on the support ring on opposite sides of the sealing sheets, and a spring which exerts a force on the holders to resist movement of the holders with respect to the support ring.
